Europäisches Patentamt

European Patent Office

Office européen des brevets

(19)

(11) Veröffentlichungsnummer: **0 049 347**
**B1**

(12) # EUROPÄISCHE PATENTSCHRIFT

(45) Veröffentlichungstag der Patentschrift:
**14.11.84**

(51) Int. Cl.³: **B 65 G 51/32,** B 65 G 51/34

(21) Anmeldenummer: **81106318.9**

(22) Anmeldetag: **13.08.81**

(54) **Rohrpostförderanlage für Feingutproben.**

(30) Priorität: **08.10.80 DE 3038073**

(43) Veröffentlichungstag der Anmeldung:
**14.04.82 Patentblatt 82/15**

(45) Bekanntmachung des Hinweises auf die Patenterteilung:
**14.11.84 Patentblatt 84/46**

(84) Benannte Vertragsstaaten:
**BE DE FR GB IT**

(56) Entgegenhaltungen:
**DD - A - 86 346**
**DE - A - 1 907 813**
**DE - A - 2 722 865**

(73) Patentinhaber: **Krupp Polysius AG,**
**Graf-Galen-Strasse 17, D-4720 Beckum (DE)**

(72) Erfinder: **Beltrop, Herbert, Ing. grad.,**
**Spiechernstrasse 48, D-4700 Hamm (DE)**
Erfinder: **Teutenberg, Josef, Ing. grad., Lippborger**
**Strasse 15A, D-4720 Beckum (DE)**

(74) Vertreter: **Tetzner, Volkmar, Dr.-Ing. Dr. Jur.,**
**Van-Gogh-Strasse 3, D-8000 München 71 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Rohrpostförderanlage entsprechend dem ersten Teil des Anspruches 1.

Aus der DD-A-86 346 ist eine einfache Rohrpostförderanlage bekannt, in der kombinierte Sende-Empfangsstationen zum Senden und Empfangen einfacher Rohrpostbüchsen vorgesehen sind. In einer solchen Sende-Empfangsstation ist ein die Rohrpostbüchse aufnehmendes Rohrstück um eine quer verlaufende Achse angeordnet und kann in eine Füll- bzw. Entleerungsstellung gekippt werden. Das kippbare Rohrstück ist dabei in einem schräg verlaufenden Abschnitt der Förderrohrleitung angeordnet.

Es ist weiterhin eine Rohrpostförderanlage der im ersten Teil des Anspruches 1 genannten Art bekannt (DE-A-2 722 865), bei der die Probeaufgabestation mit der Probeempfangsstation durch eine einzige Förderrohrleitung verbunden ist und ein auf Saug- und Druckbetrieb umschaltbares Gebläse sowie zwei Rückschlagventile vorgesehen sind.

Der Erfindung liegt die Aufgabe zugrunde, eine Rohrpostförderanlage der letztgenannten Art bei zuverlässiger Betriebsweise baulich noch weiter zu vereinfachen.

Diese Aufgabe wird erfindungsgemäss durch die kennzeichnenden Merkmale des Anspruches 1 gelöst.

Zweckmässige Ausgestaltungen der Erfindung sind Gegestand der Unteransprüche.

Ein Ausführungsbeispiel der Erfindung ist in der Zeichnung veranschaulicht. Es zeigen

Fig. 1 eine vereinfachte Gesamtansicht der Rohrpostförderanlage;

Fig. 2 eine Teil-Schnittansicht etwa gemäss der Linie II-II in Fig. 1, zur Veranschaulichung der Ausbildung des Förderrohrleitungsabschnittes mit dem kippbaren Rohrstück.

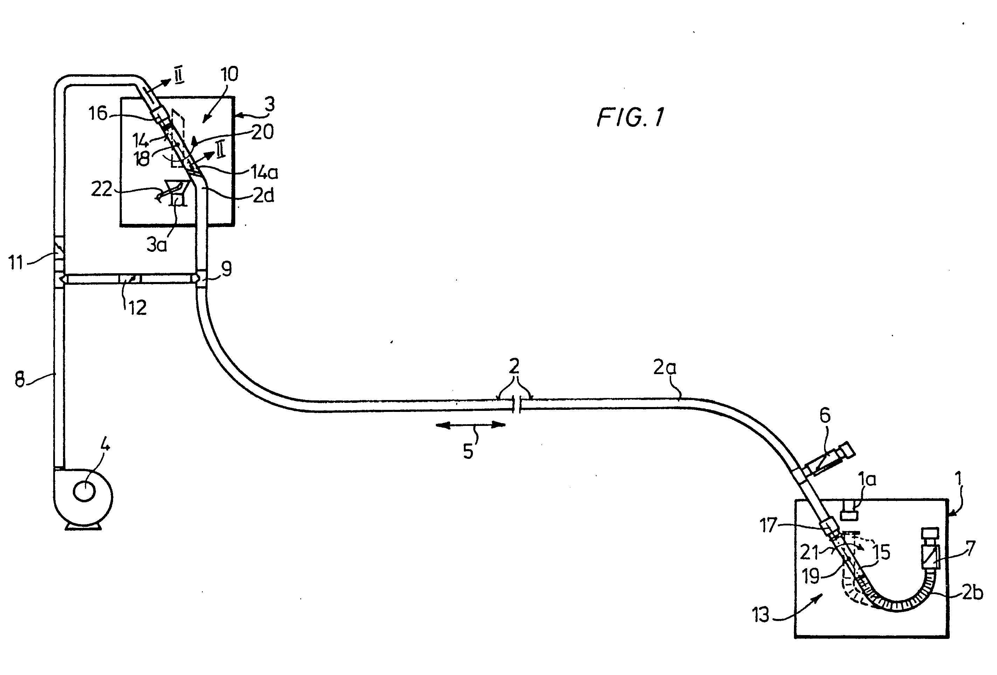

Anhand der Fig. 1 sei zunächst der allgemeine Aufbau und die Förderfunktion der Rohrpostförderanlage erläutert.

Mit Hilfe dieser Rohrpostförderanlage sollen Feingutproben beispielsweise aus einem Herstellungsteil eines Betriebes zu einer Probebearbeitung- bzw. -auswertungsstelle gefördert werden, wobei die Feingutproben in Probetransportbüchsen versandt werden. Die Rohrpostförderanlage enthält eine im Betrieb aufgestellte Probeaufgabestation (im folgenden nur Betriebsstation genannt) 1, eine einzige Förderrohrleitung 2 sowie eine Probeempfangsstation 3, die im folgenden als Laborstation bezeichnet wird. Die Förderrohrleitung 2 wird durch ein Fördergebläse 4, das auf Saug- und Druckbetrieb umgeschaltet werden kann, in beiden Förderrichtungen (Doppelpfeil 5) mit Förderluft beaufschlagt. Das Gebläse 4 ist der einen Station, vorzugsweise der Laborstation 3, zugeordnet, während in der Nähe der anderen Station, also der Betriebsstation 1, zwei Rückschlagventile 6 bzw. 7 in der Förderrohrleitung 2 vorgesehen sind. Das erste Rückschlagventil 6 befindet sich dabei im Bereich zwischen den beiden Stationen 1 und 3, während das zweite Rückschlagventil 7 an dem über die Betriebsstation 1 hinausgehenden Ende 2b der Förderrohrleitung 2 vorgesehen ist, das durch einen flexiblen Schlauch gebildet wird.

Die von der einen Station zur anderen zu fördernden Probetransportbüchsen werden vor allem in dem Förderabschnitt 2 a der Förderrohrleitung 2 transportiert, der sich zwischen den beiden Stationen 1 und 3 befindet. Zwischen dem Gebläse 4 und der Laborstation 3 befindet sich noch ein Luftleitungsabschnitt 8. In dem reinen Luftleitungsabschnitt sind ausserdem — wie sich aus der folgenden Funktionsbeschreibung noch näher ergibt — ferner ein T-Stück 9 (Anschluss an den Förderabschnitt 2a) sowie einstellbare Drosselklappen 11 und 12 vorgesehen. In der Laborstation 3 befindet sich eine Sende- und Empfangstelle 10, während sich in der Betriebsstation 1 eine Sende- und Empfangstelle 13 befindet; auf diese beiden Stellen wird später noch näher eingegangen.

Wenn eine gefüllte Probetransportbüchse von der Betriebsstation 1 zur Laborstation 3 gefördert werden soll, dann wird das Fördergebläse 4 auf Saugbetrieb geschaltet, wobei dann gleichzeitig (automatisch) das zweite Rückschlagventil 7 öffnet und das erste Rückschlagventil 6 schliesst. Eine in der Sende- und Empfangstelle 13 der Betriebsstation 1 aufgegebene Probetransportbüchse wird dann im Saugbetrieb zur Sende- und Empfangstelle 10 der Laborstation gefördert. Bei Annäherung an die Laborstation 3 wird die Probetransportbüchse durch eine entsprechende Einstellung der Drosselklappen 11 und 12 im Luftleitungsabschnitt 8 durch ein sich bildendes Luftpolster abgebremst. Erst wenn die Probetransportbüchse in der Sende- und Empfangstelle 10 aufgenommen ist, wird das Gebläse 4 abgeschaltet.

Soll umgekehrt eine leere Probetransportbüchse von der Laborstation 3 zur Betriebsstation 1 zurückgesendet werden, dann wird das Gebläse 4 auf Druckbetrieb umgeschaltet. Das Gebläse 4 wird vorzugsweise jedoch erst eingeschaltet, nachdem die an der Sende- und Empfangstelle 10 der Laborstation 3 aufgegebene leere Probetransportbüchse nach unten gefallen ist und etwa das T-Stück 9 passiert hat. Durch den Druckförderbetrieb wird dann selbsttätig das erste Rückschlagventil 6 geöffnet, während das zweite Rückschlagventil 7 geschlossen wird. Die Probetransportbüchse fährt dann mit voller Fahrgeschwindigkeit bis zum ersten Rückschlagventil 6, worauf dann eine sehr schnelle Abbremsung erfolgt, da das übrige Förderrohrleitungsstück durch das zweite Rückschlagventil 7 vollkommen abgeschlossen ist. Die Probetransportbüchse kann dann gedämpft in die Betriebsstation 1 bis zur Sende- und Empfangstelle 13 einfahren.

Um in einer der genannten Stationen die verschiedenen erforderlichen Betriebsoperationen mit den Probetransportbüchsen durchführen zu können, enthält jede Station in ihrer Sende- und Empfangstelle 10 bzw. 13 ein die Probetransportbüchse aufnehmendes Rohrstück 14 bzw. 15, das um eine quer zur Längsachse 16 bzw. 17 dieses Rohrstückes liegende Achse 18 bzw. 19 in eine Füll- bzw. Entleerstellung gekippt werden kann. Bei der Darstellung und Ausführung gemäss Fig. 1 kann das Rohrstück 14 in der Laborstation 3 in Richtung des Pfeiles 20 entgegen dem Uhrzeigersinn und das Rohrstück in 15 in der Betriebsstation 1 entsprechend Pfeil 21 im Uhrzeigersinn gekippt werden, damit die entsprechende Füll- bzw. Entleerstellung erreicht werden kann.

In der Betriebsstation 1 ist ausserdem noch eine Füllvorrichtung 1a angedeutet, die in der gestrichelt angedeuteten Füllstellung des Rohrstückes 15 axial mit diesem Rohrstück 15 fluchtet, während in der Laborstation 3 unterhalb des kippbaren Rohrstückes 14 ein Entleerungstrichter 3a zu erkennen ist, der zu der gestrichelt angedeuteten Entleerungsstellung des Rohrstückes 14 ausgerichtet ist und zusätzlich noch mit einer Pressluftleitung 22 zum Reinigen einer entleerten Probetransportbüchse ausgestattet sein kann.

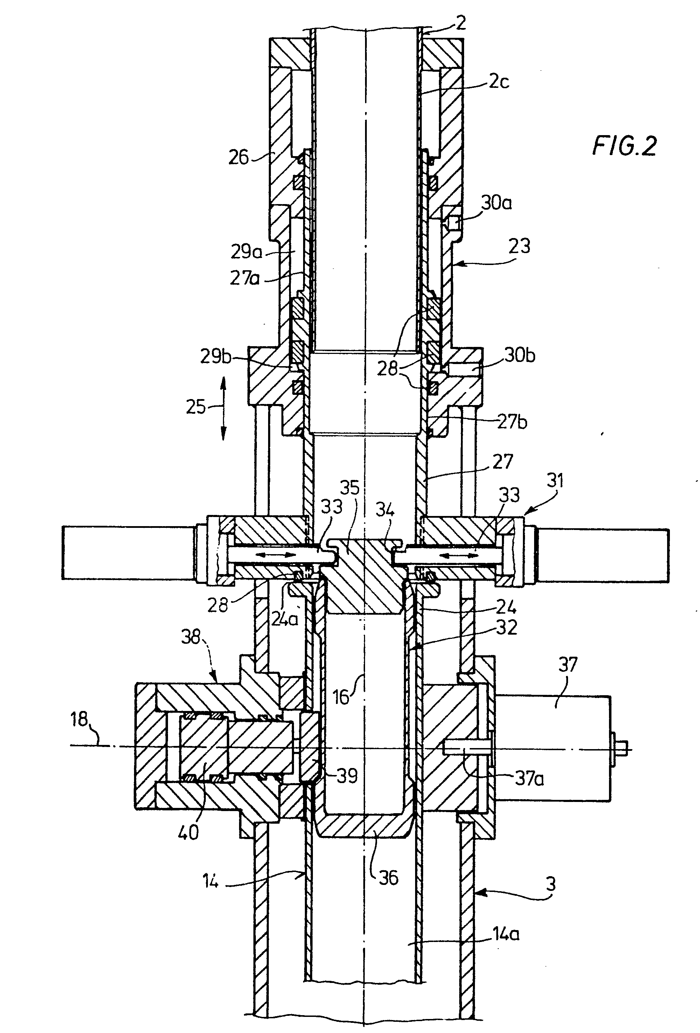

Anhand der Fig. 2 sei nun der Aufbau eines Förderrohrleitungsabschnittes beschrieben, in dem ein kippbares Rohrstück angeordnet ist. Da die Anordnung und Funktion der kippbaren Rohrstücke in den Betriebs- und Laborstationen im Prinzip gleichartig ist, sei lediglich auf die Ausführung im Bereich der Laborstation 3 näher eingegangen, während Unterschiede dazu hinsichtlich der Betriebsstation 1 dann ergänzend erläutert werden.

In Fig. 2 ist zunächst eine pneumatische Dichtung 23 für die Förderrohrleitung 2 (in der oberen Zeichnungshälfte) veranschaulicht, die an einem feststehenden Teil 2c der Förderrohrleitung angeordnet ist. Diese pneumatische Dichtung 23 enthält einen mit dem festen Rohrleitungsteil 2c fest verbundenen rohrförmigen Teil 26 sowie einen in Richtung des Doppelpfeiles 25 gleitbeweglich und abgedichtet darin aufgenommenen inneren rohrförmingen Teil 27. Der gleitbewegliche Dichtungsteil 27 ist im Förderzustand der Förderrohrleitung 2 pneumatisch gegen das ihm zugewandte, gerade, d.h. rechtwinklig zur Längsachse 16, abgeschnittene Ende des kippbaren Rohrstückes 14 gedrückt, so dass sich hier ein staubdichter Abschluss ergibt. Zwischen den beiden Dichtungsteilen 26 und 27 sind an entsprechenden Stellen mehrere passende Ringdichtungen 28 eingesetzt. Die Aussenumfangsseiten 27a, 27b des inneren Dichtungsteiles 27, die mit entsprechenden Innenumfangsabschnitten (Dichtungsabschnitten) des äusseren Dichtungsteiles 26 in Gleiteingriff stehen, sind vorzugsweise geläppte und verchromte Gleitflächen, so dass sich eine einwandfreie axiale Gleitführung ergibt. Im Bereich dieser Gleitberührungsstellen 27a und 27b sind mit Druckluft beaufschlagbare Kammern (z.B. bei 29a und 29b angedeutet) vorgesehen, die mit Druckluftanschlüssen 30a und 30b in Verbindung stehen, von denen beispielsweise der obere Druckluftanschluss 30a zwecks Absenkens des Dichtungsteiles 27 mit Druckluft beaufschlagbar ist, während zum Anheben der untere Druckluftanschluss 30b mit Druckluft beaufschlagt wird. Bei einem Dichtungseingriff legt sich der axial am unteren freien Ende des Dichtungsteiles 27 vorspringende Dichtungsring 28 fest an die ihm zugewandte axiale Randfläche 24a des entsprechenden Endes 24 des kippbaren Rohrteiles 14 an.

An dem relativ zum kippbaren Rohrstück 14 pneumatisch verschiebbaren Dichtungsteil 27 ist ferner eine Kappenabzugseinrichtung 31 befestigt, die somit beim Herstellen und Lösen der pneumatischen Abdichtung ebenfalls mit in Richtung des Doppelpfeiles 25 verschoben wird. Diese Kappenabzugseinrichtung 31 besitzt quer zur Probetransportbüchse 32 bewegbare Kappeneingriffselemente, die in diesem Falle als pneumatisch betätigbare Schieber 33 ausgebildet sind. Diese Schieber 33 greifen in eine Umfangsnute 34 der Transportbüchsen-Verschlusskappe 35 ein, die die Öffnungen der Transportbüchse 32, bei der Darstellung der Fig. 2 also das obere Ende, verschliesst.

Hinsichtlich der Ausbildung des kippbaren Rohrstückes 14 sei an dieser Stelle unter gleichzeitiger Bezugnahme auf Fig. 1 erwähnt, dass dieses Rohrstück 14 an seinem einen, unteren Ende 14a schräg abgeschnitten ist und dabei mit einem entsprechend schräg abgeschnittenen Teil 2d der Förderrohrleitung 2 abdichtend zusammenpasst, wobei die gebildete Schrägfläche des Förderrohrleitungsteiles 2d in Kipprichtung (Pfeil 20) des Rohrstückes 14 weist. In Fig. 2 lässt sich dann wiederum erkennen, dass der das schräg abgeschnittene Ende aufweisende untere Teil 14a des Rohrstückes 14 den Boden 36 der Probetransportbüchse aufnimmt.

In Fig. 2 ist im mittleren Längsabschnitt des Rohrstückes 14 die (geometrische) Kippachse 18 strichpunktiert angedeutet. Um diese Kippachse 18 kann das Rohrstück 14 mit Hilfe eines nur angedeuteten, steuerbaren Kippantriebsmotors 37 gekippt werden. Dieser Kippantriebsmotor 37 kann an einem festen Teil der Laborstation 3 befestigt sein, während seine Abtriebswelle 37a drehfest mit dem kippbaren Teil 14 verbunden ist (wie in der Zeichnung angedeutet).

Eine in der Sende- und Empfangsstelle 10 der Laborstation 3 ankommende Probetransportbüchse 32 wird sofort — automatisch in der richtigen Position — von einer Büchsenfestklemmeinrichtung 38 aufgefangen und festgehalten, die auch während des Kippvorganges des Rohrstückes 14 in Tätigkeit bleibt und erst zum Rücksenden der — in diesem Falle geleerten — Probetransportbüchse 32 in die andere Station wieder inaktiv gemacht wird. Im dargestellten Ausführungsbeispiel ist die Büchsenfestklemmeinrichtung 38 im Bereich der Kippachse 18 des Rohrstückes 14 vorgesehen. Diese Einrichtung 38 enthält wenigstens ein quer zur Längsachse 16 des Rohrstückes 14 bewegbares Klemmelement 39 und eine dieses Klemmelement bewegende Zylinder-Kolben-Einheit 40, wobei — wie dargestellt — das Klemmelement an der Kolbenstange der Zylinder-Kolben-Einheit 40 befestigt oder ein Teil des Kolbens der Einheit 40 sein kann.

Wenn somit eine volle Probetransportbüchse 32 von der Betriebsstation 1 in die Laborstation 3 eingefahren ist und in der richtigen Stellung mit Hilfe der Einrichtung 38 in dem Rohrstück 14 festgeklemmt ist, dann wird zunächst die Kappenabzugseinrichtung 31 in ihre Eingriffsstellung gefahren und darauf zusammen mit der pneumatischen Dichtung 23 hochgefahren, so dass gleichzeitig die Rohrleitungsdichtung gelöst und die Verschlusskappe 35 von der Büchse 32 abgezogen wird. Daraufhin wird das Rohrleitungsstück 14 im Gegenuhrzeigersinn (Pfeil 20) gekippt, damit das in der Probetransportbüchse 32 befindliche Material ausgeschüttet werden kann. Es lässt sich in Fig. 1 gut erkennen, dass die Förderrohrleitung im Bereich der Laborstation 3 schräg verläuft, so dass das Rohrstück 14 nach der entsprechenden Kippbewegung etwa senkrecht steht, wodurch ein völliges Entleeren der Probetransportbüchse 32 gewährleistet ist. Nach einem Reinigen (mittels Pressluft über die Pressluftleitung 22) der Probetransportbüchse 32 schwenkt das Rohrstück 14 wieder in seine Förderlage (entgegen dem Pfeil 20) so zurück, dass sein unteres Ende 14a in eine einwandfreie Abdichtungslage mit dem Rohrleitungsteil 2d (Schrägflächen) gelangt, woraufhin wiederum gleichzeitig die pneumatische Rohrleitungsdichtung gegenüber dem Rohrstück 14 wirksam wird und die Verschlusskappe 35 auf die Büchse aufgesetzt wird. Nach dem Lösen der Kappeneingriffselemente (Schieber 33) und dem Lösen der Büchsenfestklemmeinrichtung 38 kann die Probetransportbüchse 32 in der weiter oben geschilderten Weise zur Betriebsstation 1 zurückgefördert werden.

Hinsichtlich der Unterschiede in der Ausbildung und Funktion des kippbaren Rohrstückes 14 der Laborstation 3 zu dem kippbaren Rohrstück 15 in der Station 1 sei insbesondere auf die schematische Darstellung in Fig. 1 verwiesen. Hiernach ist das untere Ende des Rohrstückes 15 über einen flexiblen Schlauch (Rohrleitungsende 2b) angeschlossen, so dass das Rohrstück 15 im Uhrzeigersinn in seine Füllstellung geschwenkt werden kann, wie es gestrichelt angedeutet ist. Der Kippantrieb, die pneumatische Rohrleitungsdichtung, die Kappenabzugseinrichtung und die Büchsenfestklemmeinrichtung können ansonsten in entsprechender Weise gemäss Fig. 2 ausgeführt sein.

## Patentansprüche

1. Rohrpostförderanlage für Feingutproben, enthaltend wenigstens eine Probeaufgabestation (1) zum Füllen, Schliessen und Absenden von Probetransportbüchsen (32), eine Probeempfangstation (3) zum Empfangen, Entleeren und Zurückfördern der Probetransportbüchsen (32), eine die Probeaufgabestation (1) mit der Probeempfangsstation (3) verbindende Förderleitung (2), ein auf Saug- und Druckbetrieb umschaltbares Gebläse (4) sowie zwei Rückschlagventile (6, 7), wobei das Gebläse (4) der einen Station (3) zugeordnet und das erste Rückschlagventil (6) in dem zwischen den beiden Stationen (1, 3) befindlichen Rohrleitungsabschnitt (2a) in der Nähe der anderen Station (1) angeordnet ist, während das zweite Rückschlagventil (7) an dem über diese zuletzt genannte Station (1) hinausgehenden Ende (2b) der Förderrohrleitung (2) vorgesehen ist, und wobei das erte Rückschlagventil (6) im Saugluftbetrieb schliesst und das zweite Rückschlagventil (7) öffnet, während im Druckluftbetrieb das erste Rückschlagventil (6) öffnet und das zweite Rückschlagventil (7) schliesst, gekennzeichnet durch folgende Merkmale:

a) in einem schräg verlaufenden Abschnitt der Förderrohrleitung (2) innerhalb der Aufgabe- bzw. Empfangsstation (1, 3) ist ein die Probetransportbüchse (32) aufnehmendes Rohrstück (14, 15) angeordnet, das um eine quer zu seiner Längsachse liegende Achse (18, 19) in eine Füll- bzw. Entleerungsstellung kippbar ist;

b) der untere Teil (14a) des kippbaren Rohrstückes (14) ist zur Aufnahme des Bodens (36) der Probetransportbüchse (32) bestimmt, während das andere Ende (24) die mit einer Kappe (35) verschliessbare Öffnung der Probetransportbüchse (32) aufnimmt und mit einer pneumatisch betätigbaren Förderrohrleitungs-Dichtung (23) zusammenwirkt, die mit einer Kappenabzugseinrichtung (31) verbunden ist;

c) im Bereich der Kippachse (18) des kippbaren Rohrstückes (14) ist eine Büchsenfestklemmeinrichtung (38) vorgesehen.

2. Rohrpostförderanlage nach Anspruch 1, dadurch gekennzeichnet, dass das kippbare Rohrstück (14) ein gerades oberes Ende und ein schräg abgeschnittenes unteres Ende besitzt, wobei letzteres mit einem entsprechend schräg abgeschnittenen Teil (2d) der Förderrohrleitung (2) abdichtend zusammenwirkt und die gebildete Schrägfläche des Förderrohrleitungsteiles (2d) in Kipprichtung (20) des Rohrstückes weist.

3. Rohrpostförderanlage nach Anspruch 1, dadurch gekennzeichnet, dass die Dichtung (23) an einem feststehenden Teil (2c) der Förderrohrleitung (2) angeordnet ist und einen in Achsrichtung dieses Förderrohrleitungsteiles (2c) relativ zum kippbaren Rohrstück (14) pneumatisch verschiebbaren Dichtungsteil (27) aufweist, an dem die Kappenabzugseinrichtung (31) befestigt ist, die quer zur Probetransportbüchse (32) bewegbare Kappeneingriffselemente (33) besitzt.

4. Rohrpostförderanlage nach Anspruch 3, dadurch gekennzeichnet, dass die Kappeneingriffselemente als pneumatisch betätigbare Schieber (33) ausgebildet sind.

5. Rohrpostförderanlage nach Anspruch 1, dadurch gekennzeichnet, dass das kippbare Rohrstück (15) in der Probeaufgabestation (1) im Uhrzeigersinn (Pfeil 21) und das kippbare Rohrstück (14) in der Empfangsstation (3) im Gegenuhrzeigersinn (Pfeil 20) kippbar ist.

6. Rohrpostförderanlage nach Anspruch 1, dadurch gekennzeichnet, dass die Büchsenfestklemmeinrichtung (38) wenigstens ein quer zur Längsachse (16) des Rohrstückes (14) bewegbares Klemmelement (39) und eine Zylinder-Kolben-Einheit (40) als Antrieb für das Klemmelement enthält.

7. Rohrpostförderanlage nach Anspruch 1, dadurch gekennzeichnet, dass das kippbare Rohrstück (15) in der Aufgabestation (1) über ein als flexibler Schlauch ausgebildetes Ende (2b) der Förderrohrleitung (2) mit dem zweiten Rückschlagventil (7) verbunden ist.

## Claims:

1. A pneumatic-tube conveying installation for samples of fine materials, comprising at least one sample despatch station (1) for filling, closing and despatching sample carriers (32), a sample receiving station (3) for receiving, emptying and returning the sample carriers (32), a conveying duct (2) connecting the sample despatch station (1) to the sample receiving station (3), a blower (4) designed to switchover from suction to pressure mode, and two non-return valves (6, 7), the blower (4) being associated with one station (3) and the first non-return valve (6) being arranged in that conveying duct section (2a) which is situated between the two stations (1, 3) in the vicinity of the other station (1), whilst the second non-return valve (7) is arranged at that end (3b) of the conveying duct (2) which extends beyond said other station (1), and the first non-return valve (6) closing and the second non-return valve (7) opening in the vacuum mode whilst the first non-return valve (6) opens at the second non-return valve (7) closes in the compressed-air mode, characterised by the following features:

a) in an obliquely extending section of the conveying duct (2) inside the despatch and receiving station (1, 3), respectively, there is disposed a tube section (14, 15) accommodating the sample carrier (32), which tube section (14, 15) is tiltable about an axis (18, 19) extending transversely of its longitudinal axis into a filling and emptying position;

b) the lower part (14a) of the tiltable tube section (14) is intended to reveive the base (36) of the sample carrier (32), whilst the other end (24) receives the opening of the sample carrier (32) closeable by a cap (35) and cooperates with a pneumatically operable conveying duct seal (23) which is connected to a cap remover (31);

c) in the vicinity of the tilting axis (18) of the tiltable tube section (14) a carrier clamping mechanism (38) is provided.

2. A pneumatic-tube conveying installation as claimed in claim 1, characterised in that the tiltable tube section (14) has a straight cut-off upper end and an obliquely cut-off lower end which cooperates sealingly with a correspondingly obliquely cut-off part (2d) of the conveying duct (2), and the thus formed oblique face of the conveying duct part (2d) facing in the tilting direction (20) of the tube section.

3. A pneumatic-tube conveying installation as claimed in claim 1, characterised in that the seal (23) is arranged on a fixed part (2c) of the conveying duct (2) and comprises a sealing part (27) which is pneumatically displaceable relative to the tiltable tube section (14) in the axial direction of said conveying duct part (2c) and to which is fixed the cap remover (31) having cap engaging elements (33) displaceable transversely of the sample carrier (32).

4. A pneumatic-tube conveying installation as claimed in claim 3, characterised in that the cap engaging elements are formed by pneumatically operable slides (33).

5. A pneumatic-tube conveying installation as claimed in claim 1, characterised in that the tiltable tube section (15) at the sample despatch station (1) is tiltable clockwise (arrow 21) whilst the tiltable tube section (14) at the receiving station (3) is tiltable anticlockwise (arrow 20).

6. A pneumatic-tube conveying installation as claimed in claim 1, characterised in that the carrier clamping mechanism (38) comprises at least one clamping element (39) displaceable transversely of the longitudinal axis (16) of tube section (14) and a cylinder-and-piston unit (40) as the drive for the clamping element.

7. A pneumatic-tube conveying installation as claimed in claim 1, characterised in that the tiltable tube section (15) at the despatch station (1) is connected to the second non-return valve (7) by an end (2b) of the conveying duct (2) in the form of a flexible hose.

## Revendications

1. Installation de transport pneumatique pour échantillons de produit fin, comprenant au moins une station (1) d'envoi d'échantillon destinée au remplissage, à la fermeture et à l'expédition de capsules de transport d'échantillon (32), une station réceptrice (3) destinée à la réception, au vidage et au renvoi des capsules de transport (32), un tube (2) reliant la station d'envoi (1) et la station de réception (3), un ventilateur réversible (4) pouvant aspirer ou refouler, ainsi que deux soupapes de retenue (6, 7), le ventilateur (4) étant monté à l'une des stations (3) et la première soupape de retenue (6) étant disposée dans la partie du tube (2a) qui se trouve entre les deux stations (1, 3), à proximité de l'autre station (1), tandis que la seconde soupape de retenue (7) est prévue sur l'extrémité (2b) du tube (2) qui se prolonge au-delà de la dernière station mentionnée (1), la première soupape de retenue (6) se fermant et la seconde (7) s'ouvrant lorsque le ventilateur aspire, tandis que, lorsque ce dernier refoule, la première soupape de retenue (6) s'ouvre et la seconde (7) se ferme, installation caractérisée par les particularités suivantes:

a) un tronçon de tube (14, 15) destiné à loger la capsule de transport d'échantillon (32) et placé dans une partie du tube de transport (2) qui est disposée obliquement à l'intérieur de la station d'envoi ainsi que de la station réceptrice (1, 3) peut basculer à une position de remplissage ou à une position de vidage autour d'un axe (18, 19) qui est perpendiculaire à son axe de symétrie longitudinal;

b) la partie inférieure (14a) du tronçon de tube basculant (14) est destinée à réceptionner le fond (36) de la capsule de transport d'échantillon (32), tandis que son autre extrémité (24), qui loge l'ouverture de la capsule de transport (32) obturable par un capuchon (35), coopère avec un joint (23) d'étanchéité du tube de transport à commande pneumatique, ce joint étant relié à un dispositif (31) d'enlèvement du capuchon;

c) un dispositif (38) d'immobilisation par serrage de la capsule est prévu à proximité de l'axe (18) de pivotement du tronçon de tube baculant (14).

2. Installation de transport pneumatique selon la revendication 1, caractérisé en ce que le tronçon de tube basculant (14) comporte une extrémité supérieure à découpe droite et une extrémité inferieure à découpe oblique, cette dernière coopérant de manière étanche avec une partie (2d) du tube de transport (2) à découpe correspondante oblique et la surface oblique formée de la partie correspondante (2d) du tube de transport étant orientée dans la direction (20) de basculement du tronçon de tube.

3. Installation de transport pneumatique selon la revendication 1, caractérisée en ce que le joint d'étanchéité (23) est disposé sur une partie fixe (2c) du tube de transport (2) et comprend un élément (27) translatable pneumatiquement par rapport au tronçon de tube basculant (14) dans la direction de l'axe de cette partie (2c) du tube de transport, le dispositif (31) d'enlèvement du capuchon, qui comprend des éléments (33) de prise de ce dernier mobiles perpendiculairement à la capsule de transport (32), étant fixé audit élément translatable (27) du joint d'étanchéité.

4. Installation de transport pneumatique selon la revendication 3, caractérisée en ce que les éléments de prise du capuchon sont réalisés sous forme de coulisseaux (33) à commande pneumatique.

5. Installation de transport pneumatique selon la revendication 1, caractérisée en ce que le tronçon de tube basculant (15) de la station d'envoi (1) peut basculer dans le sens des aiguilles d'une montre (flèche 21) et le tronçon de tube correspondant (14) de la station de réception (3) peut basculer dans le sens inverse à celui des aiguilles d'une montre (flèche 20).

6. Installation de transport pneumatique selon la revendication 1, caractérisée en ce que le dispositif (38) d'immobilisation par serrage de la capsule comprend au moins un élément de serrage (39) mobile perpendiculairement à l'axe de symétrie longitudinal (16) du tronçon de tube (14), ainsi qu'un groupe (40) à cylindre et piston qui forme la commande de l'élément de serrage.

7. Installation de transport pneumatique selon la revendication 1, caractérisée en ce que le tronçon de tube basculant (15) de la station d'envoi (1) est relié à la seconde soupape de retenue (7) par l'extrémité (2b) du tube de transport (2) qui est réalisée sous forme d'un flexible.

FIG.1

0 049 347

0 049 347

FIG.2